(19) **Europäisches Patentamt**

**European Patent Office**

**Office européen des brevets**

(11) **EP 1 511 102 A2**

(12) **EUROPÄISCHE PATENTANMELDUNG**

(43) Veröffentlichungstag:
02.03.2005 Patentblatt 2005/09

(51) Int Cl.$^7$: **H01M 8/02**

(21) Anmeldenummer: **04019393.0**

(22) Anmeldetag: **16.08.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **14.08.2003 DE 10337802**

(71) Anmelder: **Behr GmbH & Co. KG**
**70469 Stuttgart (DE)**

(72) Erfinder:
• **Kaiser, Wolfram Dr.**
**79848 Bonndorf (DE)**
• **Watzlawski, Markus**
**73760 Ostfildern (DE)**

(54) **Bipolarplatte und Brennstoffzellenstapel**

(57) Die Erfindung betrifft eine Bipolarplatte, insbesondere für einen Brennstoffzellenstapel für ein Kraftfahrzeug, mit zumindest einem ersten Fluidkanal, zumindest einem ersten Zuflußdurchbruch und zumindest einem ersten Abflußdurchbruch für ein erstes Medium, gekennzeichnet dadurch daß der erste Zuflußdurchbruch und der erste Abflußdurchbruch in nicht diametral gegenüberliegenden Randbereichen der Bipolarplatte, insbesondere benachbart zueinander angeordnet sind.

EP 1 511 102 A2

**Beschreibung**

Die Erfindung betrifft eine Bipolarplatte gemäß dem Oberbegriff des Anspruchs 1 sowie einen Brennstoffzellenstapel zur Gewinnung von elektrischem Strom, der aus zumindest einer Brennstoffzelle besteht.

Die Umwandlung von chemischer in elektrische Energie mittels Brennstoffzellen stellt eine effiziente und umweltfreundliche Methode zur Gewinnung von elektrischem Strom aus den Betriebsmedien Wasserstoff und Sauerstoff dar. Dabei finden üblicherweise zwei räumlich getrennte Elektrodenreaktionen statt, bei denen Elektronen freigesetzt bzw. gebunden werden. Ein Beispiel für zwei korrespondierende Elektrodenreaktionen sind folgende Reaktionen:

$$H_2 => 2H^+ + 2e^- \qquad\qquad \text{(Anodische Reaktion)}$$

$$2H^+ + 2e{-} + \tfrac{1}{2}\,O_2 => H_2O \qquad\qquad \text{(Kathodische Reaktion)}$$

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete Brennstoffzellen aufeinandergestapelt und ein Brennstoffzellenstapel als Stromquelle verwendet.

Eine Brennstoffzelle besteht dabei aus einer Elektrolyteinheit, welche die Reaktanden Wasserstoff und Sauerstoff voneinander trennt und eine Ionenleitfähigkeit, insbesondere eine $H^+$-Protonenleitfähigkeit, aufweist, sowie aus zwei mit Katalysatormaterial belegten Elektroden, die unter anderem zum Abgriff des von der Brennstoffzelle erzeugten elektrischen Stroms erforderlich sind.

Die Reaktanden Wasserstoff und Sauerstoff und das Reaktionsprodukt Wasser sowie gegebenenfalls ein Kühlmittel zum Abtransport überschüssiger Reaktionswärme strömen durch Fluidkanäle, wobei die Reaktanden nicht notwendigerweise in reiner Form vorliegen müssen. Beispielsweise kann das Fluid auf der Kathodenseite Luft sein, deren Sauerstoff an der Reaktion teilnimmt. Insbesondere bei Verwendung eines Kühlmittels wird durch eine thermische Verbindung der jeweiligen Fluidkanäle für einen ausreichenden Wärmeübertrag zwischen den jeweiligen Fluiden gesorgt.

In der DE 100 15 360 A1 wird eine Bipolarplatte für Brennstoffzellen beschrieben, die aus zwei geprägten Platten besteht. Eine Fläche der geprägten Platten weist jeweils eine positive Kanalstruktur auf und eine andere Fläche weist eine korrespondierende negative Kanalstruktur auf. Durch Verbinden beider Platten ergibt sich ein platteninneres Kanalsystem für ein Kühlmittel und an den Außenflächen jeder Platte ein Kanalsystem für Gasströme.

Während des Betriebes von Brennstoffzellen mit derartigen Bipolarplatten wird durch den Einsatz eines Kühlmittels die Temperatur der Reaktanden über einen Großteil der Fläche der Platten auf einem im wesentlichen konstanten Niveau gehalten.

Für den Transportvorgang der Ionen, insbesondere Protonen, innerhalb einer Elektrolyteinheit ist zumeist ein gewisses Maß an Feuchtigkeit in der Elektrolyteinheit erforderlich. Aus diesem Grund wird üblicherweise durch eine Befeuchtung der Reaktanden der Taupunkt der jeweiligen Betriebsgase in den Bereich der Betriebstemperatur der Brennstoffzelle (in der Regel 60° - 80°C) angehoben, wodurch ein Austrocknen der Elektrolyteinheit und ein damit verbundener Leistungsverlust der Brennstoffzelle vermieden wird.

Aufgrund einer Anreicherung zumindest eines Betriebsgases mit dem Reaktionsprodukt Wasser steigt der Taupunkt des Betriebsgases während des Strömens durch die Brennstoffzelle sehr schnell über die Betriebstemperatur. Daraus resultiert eine Ansammlung von flüssigem Wasser in dem jeweiligen Strömungskanal, die sich nachteilig auf die Leistungsausbeute der Brennstoffzelle auswirkt.

In der älteren Anmeldung DE 102 24 397 der Anmelderin wird deshalb vorgeschlagen, die Fluidkanäle im wesentlichen über ihre gesamte Länge parallel zueinander anzuordnen. Dadurch kann ein Temperaturprofil entlang erster Fluidkanäle über eine thermische Verbindung auf zweite Fluidkanäle übertragen werden, so daß die Menge des sich in flüssiger Form ansammelnden Produktwassers reduzierbar ist.

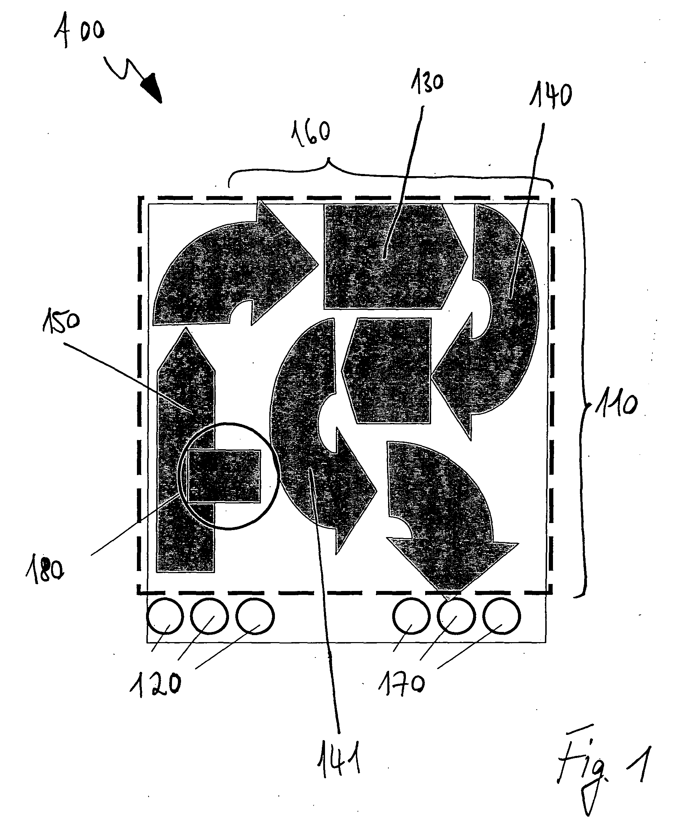

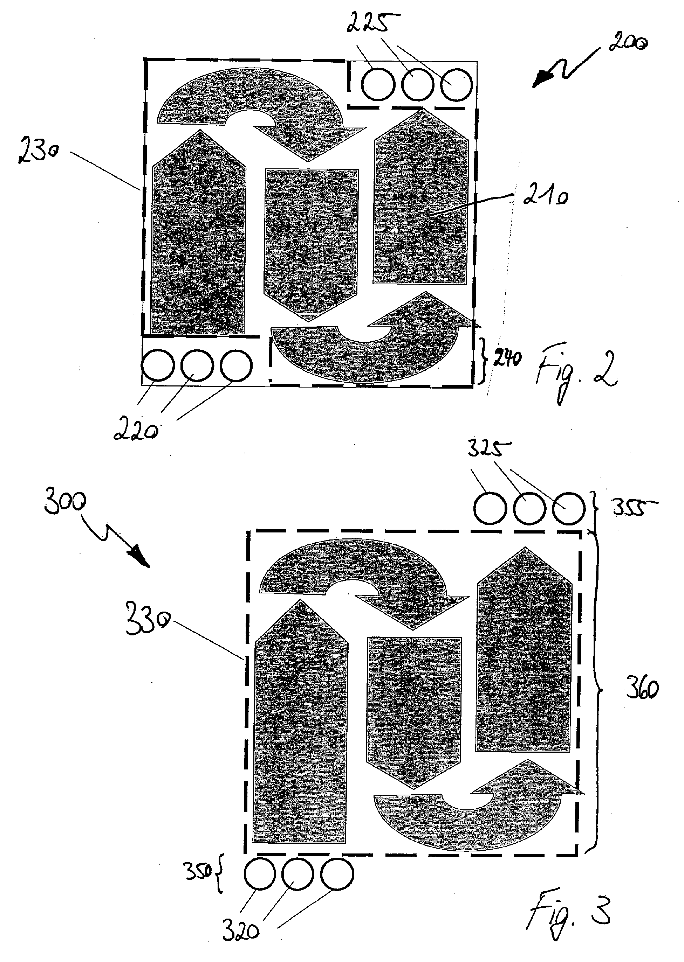

Wie Fig. 2 zeigt, ist ein Nachteil einer solchen Ausgestaltung, daß Produktwasser, das während eines Betriebes des Brennstoffzellenstapels 200 in den Fluidkanälen 210 entsteht, nicht vollständig aus den Fluidkanälen in die Abflußdurchbrüche 220 - und erst recht nicht in die Zuflußdurchbrüche 225 - der Bipolarplatten 230 abfließen kann, da Teilbereiche 240 der aktiven Zellfläche tiefer als die Abflußdurchbrüche 220 angeordnet sind. Dies führt unter Umständen zu einer Ansammlung von Produktwasser in den Teilbereichen 240, was eine erhebliche Effizienzsenkung der Brennstoffzelle zur Folge haben kann.

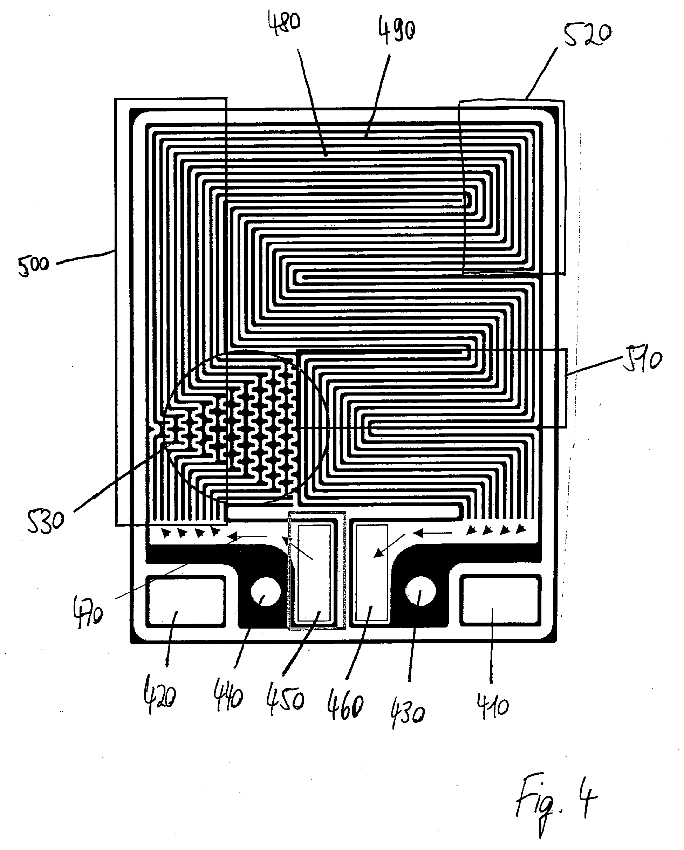

Um diesen Nachteil zu umgehen, können die Anschlußbereiche 350 mit den Abflußdurchbrüchen 320 unterhalb der aktiven Zellfläche 360 angeordnet werden, wie bei der Bipolarplatte 330 des Brennstoffzellenstapels 300 in Fig. 3 dargestellt. Dies ist jedoch mit einer ungünstigen Bauraumausnutzung verbunden, da die Anschlußbereiche 355 und 350 mit den Zuflußdurchbrüchen 325 und den Abflußdurchbrüchen 320 dann über die aktive Zellfläche 360 hinausragen.

Aufgabe der Erfindung ist es, eine Bipolarplatte sowie einen Brennstoffzellenstapel bereitzustellen, die die vorgenannten Nachteile nicht aufweisen.

Diese Aufgabe wird gelöst durch eine Bipolarplatte mit den Merkmalen des Anspruchs 1 sowie durch einen Brennstoffzellenstapel mit den Merkmalen des Anspruchs 7.

Eine Bipolarplatte, insbesondere zur räumlichen Trennung jeweils zweier Brennstoffzellen eines Brennstoffzellenstapels, weist gemäß Anspruch 1 zumindest einen ersten Fluidkanal für ein erstes Fluid, beispielsweise für ein erstes Prozeßgas, auf.

Gemäß einer bevorzugten Ausführungsform der erfindungsgemäßen Bipolarplatte dient zumindest ein zweiter Fluidkanal der Führung eines zweiten Fluids, insbesondere eines zweiten Prozeßgases. Besonders bevorzugt weist eine Separatoreinheit mehrere erste und mehrere zweite Fluidkanäle auf, damit ein erstes und ein zweites Fluid flächenhaft verteilbar sind.

Der zumindest eine erste und zumindest ein zweiter Fluidkanal sind bevorzugt thermisch miteinander verbunden, damit ein Wärmeaustausch zwischen den zumindest zwei Fluiden möglich ist. Der zumindest eine erste und der zumindest eine zweite Fluidkanal können beispielsweise durch eine Platte getrennt sein, die Teil der Bipolarplatte ist. Insbesondere können die ersten und/oder die zweiten Fluidkanäle als Vertiefungen in die Platte mittels eines Prägeverfahrens eingeprägt sein.

Weiterhin weist die erfindungsgemäße Bipolarplatte zumindest einen ersten Zufluß- und zumindest einen ersten Abflußdurchbruch für einen Zufluß beziehungsweise Abfluß des ersten Fluids und gegebenenfalls einen zweiten Zufluß- und insbesondere einen zweiten Abflußdurchbruch für einen Zufluß beziehungsweise Abfluß des zweiten Fluids auf. Insbesondere bei einer Bipolarplatte für eine Wasserstoff-Brennstoffzelle ist auch eine Anordnung ohne einen zweiten Abflußdurchbruch möglich, beispielsweise wenn ein zweites Fluid verbraucht wird und nicht abgeführt werden muß.

Die Aufgabe der Erfindung wird dabei dadurch gelöst, daß die Zufluß- und Abflußdurchbrüche in nicht diametral gegenüberliegenden Randbereichen der Bipolarplatte angeordnet sind. Bevorzugt sind die Zufluß- und Abflußdurchbrüche auf einer Seite der Bipolarplatte, besonders bevorzugt benachbart zueinander angeordnet. Dadurch wird erreicht, daß die Anschlußbereiche innerhalb einer einheitlichen Umfangform der Bipolarplatte, beispielsweise eines Rechtecks, angeordnet sind, verbunden mit dem Vorteil, daß Produktwasser, das unter Umständen in den ersten und/oder zweiten Fluidkanälen entsteht, abwärts zu den Abflußdurchbrüchen fließen kann.

Gemäß einer bevorzugten Ausführungsform weisen mehrere erste und/oder mehrere zweite Fluidkanäle eine gleiche Querschnittsfläche und eine gleiche Länge auf. Dadurch wird eine gleichmäßige Beaufschlagung einer aktiven Zellfläche einer Brennstoffzelle mit Prozeßgasen erreicht.

Gemäß einer vorteilhaften Ausgestaltung weisen Fluidkanäle unterschiedlich viele Serpentinen auf, so daß die Länge der Fluidkanäle aneinander angepaßt ist. Dadurch wird eine gleichmäßige Beaufschlagung einer aktiven Zellfläche einer Brennstoffzelle mit Prozeßgasen weiter vereinfacht.

Gemäß einer bevorzugten Ausführungsform verläuft ein erster Abschnitt zumindest eines ersten Fluidkanals von dem zumindest einen ersten Zuflußdurchbruch zu einem Randbereich der Bipolarplatte, der dem Randbereich der ersten Zufluß- und Abflußdurchbrüche gegenüberliegt. Ein zweiter Abschnitt des zumindest einen ersten Fluidkanals verläuft von diesem gegenüberliegenden Randbereich zu dem zumindest einen Abflußdurchbruch.

Vorteilhaft ist eine Ausgestaltung, bei der der erste Abschnitt kürzer ist als der zweite Abschnitt, beispielsweise durch eine serpentinenartige Ausgestaltung des zweiten Abschnittes mit einem oder mehreren antiparallel durchströmbaren Teilabschnitten. Dadurch wird ein Ablaufen von Produktwasser, das vor allem im zweiten Abschnitt in flüssiger Form anfällt, aufgrund der Schwerkraft ermöglicht, indem Anstiege gegen die Schwerkraft im Verlauf eines Großteils des zumindest einen Fluidkanals vermieden werden. Wird die lokale Temperatur des ersten Fluids und dessen Taupunkt in dem ersten Abschnitt so eingestellt, daß in dem ersten Abschnitt kein flüssiges Produktwasser auftritt, kann erreicht werden, daß im wesentlichen sämtliches flüssiges Produktwasser ohne Überwindung der Schwerkraft zu einem ersten Abflußdurchbruch fließen kann.

Gemäß einer weiteren Ausführungsform sind erste Fluidkanäle im wesentilche über ihre gesamte Länge parallel zu zweiten Fluidkanälen angeordnet. Dadurch wird vorteilhaft ein Temperaturprofil entlang des zumindest einen ersten Fluidkanals über eine thermische Verbindung auf den zumindest einen zweiten Fluidkanal übertragen, wodurch sich entlang des zweiten Fluidkanals ein Temperaturprofil ausbildet, das dem Temperaturprofil des ersten Fluidkanals entspricht oder zumindest ähnlich ist. Es kann den Fluidkanälen damit auf vereinfachte Weise ein Temperaturprofil aufgeprägt werden.

Zwei Fluidkanäle sind im Sinne der vorliegenden Erfindung parallel zueinander, wenn sie vorwiegend nebeneinander verlaufen. Das bedeutet, daß zwei Fluidkanäle, die nur abschnittsweise in verschiedenen Richtungen verlaufen, beispielsweise in Bereichen von Umlenkungen, ebenfalls als parallel zueinander anzusehen sind. Auch Fluidkanäle, die bereichsweise auseinanderlaufen, insbesondere im Bereich von Zuführungen zu Verteil- oder Sammelkammern, sind im wesentlichen parallel zueinander, wenn die Fluidkanäle in einem wesentlichen Bereich, wie beispielsweise einem Bereich einer Elektrode einer Brennstoffzelle, vorwiegend nebeneinander verlaufen.

Durch die Parallelität des zumindest einen zweiten Fluidkanals zu dem zumindest einen ersten Fluidkanal ist ein Temperaturprofil zumindest eines Betriebsgases entlang des zumindest einen zweiten Fluidkanals derart einstellbar, daß der Taupunkt des zumindest einen Betriebsgases in einem weiten Bereich der betreffenden Brennstoffzelle die Temperatur des Betriebsgases nicht überschreitet. Dies bedeutet, daß ein Teil des bei der Stromgewinnung anfallenden Wassers nicht in flüssiger Form transportiert werden muß.

Gemäß einer besonders bevorzugten Ausführungsform eines erfindungsgemäßen Brennstoffzellenstapels steigt im Betrieb der zumindest einen Brennstoffzelle die Temperatur eines Fluids entlang des zumindest einen zweiten Fluidkanals stetig an. Dies wird auf besonders bevorzugte und einfache Weise durch eine gleichgerichtete Durchströmung der ersten und zweiten Fluidkanäle erreicht. Besonders vorteilhaft ist ein stetig ansteigendes Temperaturprofil, bei dem der Taupunkt des zumindest einen Betriebsgases in dem gesamten Fluidkanal des Betriebsgases kleiner oder gleich der Temperatur des Betriebsgases ist, so daß einerseits wenig oder kein flüssiges Wasser in der betreffenden Brennstoffzelle anfällt und andererseits dem Elektrolyten durch den ungesättigten Gasstrom kein oder nur wenig Wasser entzogen wird. Dies wirkt sich positiv auf die Leistungsausbeute der betreffenden Brennstoffzelle und damit der Brennstoffzelleneinheit aus.

Zusätzlich wird ein Eintritt eines Fluids, beispielsweise eines Betriebsgases in den zumindest einen zweiten Fluidkanal mit einer verhältnismäßig geringen Temperatur ermöglicht. Wird das Fluid vor dem Eintritt in den zweiten Fluidkanal befeuchtet, um beispielsweise eine Austrocknung einer Elektrolyteinheit zu vermeiden, so ist aufgrund der geringen Eintrittstemperatur des Fluids der Energieaufwand für eine Befeuchtung desselben gegenüber einer Brennstoffzelle mit höherer Eintrittstemperatur reduziert. Mit dieser Energieersparnis ist eine weitere Erhöhung der Leistungsausbeute des Brennstoffzellenstapels verbunden.

Gemäß einer weiteren bevorzugten Ausbildungsform der Erfindung fällt im Betrieb der zumindest einen Brennstoffzelle die Temperatur eines Fluids entlang des zumindest einen zweiten Fluidkanals stetig ab. Dies wird besonders vorteilhaft durch entgegengesetzte Strömungsrichtungen der Fluide entlang des ersten und des zweiten Fluidkanals erreicht.

Ein stetiger Temperaturabfall ist besonders dann zu bevorzugen, wenn das Fluid in dem zumindest einen zweiten Fluidkanal während des Betriebes der Brennstoffzelle nicht mit Wasser angereichert wird, sondern einer Befeuchtung eines Elektrolyten und damit einem verbesserten Ionentransport innerhalb des Elektrolyten dient und gegebenenfalls zu diesem Zweck vor dem Eintritt in den zweiten Fluidkanal vorbefeuchtet wird. Durch die Befeuchtung des Elektrolyten wird entlang des zweiten Fluidkanals Wasser verbraucht, so daß der Taupunkt des Fluids entlang des zweiten Fluidkanals abfällt. Fällt die Temperatur entlang des zweiten Fluidkanals ebenfalls ab, wird ein Abfall der relativen Feuchtigkeit des Fluids in dem zweiten Fluidkanal vermieden oder zumindest verringert, so daß die Befeuchtung des Elektrolyten gefördert wird.

In einer bevorzugten Weiterbildung der Erfindung ist je eine Kammer zur Verteilung je eines Fluids auf mehrere erste beziehungsweise zweite Fluidkanäle und zumindest je eine Kammer zur Sammlung je eines Fluids aus den ersten beziehungsweise zweiten Fluidkanälen vorgesehen. Durch eine Integration der Kammern in den Brennstoffzellenstapel wird eine kompakte Bauweise erreicht. Insbesondere bei mehreren sich abwechselnden ersten und zweiten Fluidkanälen wird durch integrierte Kammern mit Hilfe einer geeigneten Anordnung der Kanäle ein besonders einfacher Aufbau des Brennstoffzellenstapels ermöglicht. Die Kammern werden vorzugsweise durch aufeinandergestapelte Zufluß- beziehungsweise Abflußdurchbrüche gebildet.

Die Verteilung und/oder Sammlung des Fluids geschieht über Verteilungskanäle, die zwischen der je einen Kammer und den jeweiligen Fluidkanälen derart angeordnet sind, daß Fluidkanäle, die verschiedenen Fluiden zugeordnet sind, nicht miteinander kommunizieren. Bevorzugt werden die Verteilungskanäle durch zumindest stellenweise miteinander kommunizierende Vertiefungen zweier benachbarter Platten gebildet. Besonders bevorzugt sind die Verteilungskanäle Teile der Fluidkanäle beziehungsweise werden mit den Fluidkanälen zusammen gefertigt.

Gemäß einer bevorzugten Ausgestaltung weist die Bipolarplatte zwei Platten auf. Sind die Platten, wie Folien, dünn ausgebildet, sind sie, beispielsweise durch ein Prägeverfahren, sehr einfach mit Vertiefungen, die der Bildung von Fluidkanälen dienen können, versehbar. Die Fluidkanäle kommen durch Vertiefungen in einer Folie oder Platte zustande, die gegenüber einer ebenen Oberfläche einer benachbarten Folie oder Platte angeordnet sind. Genauso gut können Vertiefungen in zwei benachbarten Folien und/oder Platten einander gegenüber angeordnet sein, so daß zumindest ein Fluidkanal durch mehrere Vertiefungen gemeinsam gebildet wird.

Besonders vorteilhaft weist zumindest eine Folie oder Platte auf zwei Seiten Vertiefungen zur Bildung von Fluidkanälen auf. Insbesondere bei einer sehr dünnen Folie oder Platte bilden Vertiefungen auf einer Seite Erhebungen auf der gegenüberliegenden Seite, wobei zwischen jeweils zwei Erhebungen auf der gegenüberliegenden Seite wiederum Vertiefungen gebildet werden. Auf diese Weise kann in einem Arbeitsgang eine Folie oder Platte mit einem Vertiefungsprofil auf zwei Seiten versehen werden, wobei ein Profil auf einer Seite komplementär zu einem Profil auf der gegenüberliegenden Seite ist.

Gemäß einer bevorzugten Weiterbildung besteht die zumindest eine Folie oder Platte aus einem elektrisch leitfähigen Material, wie beispielsweise einem Metall. Damit können die Elektroden ohne zusätzlichen Aufwand kontaktiert werden. Insbesondere bei einer elektrischen Serienschaltung wird unter Verwendung einer geringen Anzahl von Stapelschichten in dem Brennstoffzellenstapel ein Stromfluß von jeweils einer Brennstoffzelle zu einer benachbarten Brennstoffzelle ermöglicht.

Gemäß einer bevorzugten Weiterbildung wird die erfindungsgemäße Bipolarplatte in einen Brennstoffzellenstapel eingesetzt, wobei der Brennstoffzellenstapel zumindest eine Brennstoffzelle mit einem Elektrolyten und zwei Elektroden aufweist.

Die Anordnung des Brennstoffzellenstapels während eines Betriebes, beispielsweise in einem Kraftfahrzeug, ist bevorzugt dergestalt, daß die ersten Zufluß- und Abflußdurchbrüche, besonders bevorzugt auch zweite Zufluß- und Abflußdurchbrüche, der Bipolarplatte in dem Brennstoffzellenstapel auf einer Unterseite des Brennstoffzellenstapels angeordnet sind. Dadurch wird für ein Abfließen von Produktwasser aus den ersten und/oder zweiten Fluidkanälen mit Hilfe der Schwerkraft verbessert.

Unter Umständen ist es wünschenswert, einen zu der Bipolarplatte benachbarten Elektrolyten möglichst gleichmäßig, das heißt mit möglichst konstanter Gasmenge pro Flächenelement zu beaufschlagen. Strömungskanäle mit gleicher Länge und gleichem Strömungswiderstand weisen einen gleichen Volumenstrom auf, wodurch eine gleichmäßige Beaufschlagung des Elektrolyten erreichbar ist. Bei Strömungskanälen mit unterschiedlichen Kanallängen ist dies ebenfalls erreichbar, indem mittels der geometrischen Form der Kanäle deren Strömungswiderstand derart beeinflußt wird, daß längere Kanäle einen höheren Volumenstrom aufweisen als kürzere Kanäle. Vorteilhaft ist beispielsweise eine gezielte Gestaltung von Serpentinen der Kanäle, insbesondere der Serpentinenwinkel, die zwischen 0° und einschließlich 180° wählbar sind.

Die Erfindung wird nachfolgend anhand von Ausführungsbeispielen unter Bezugnahme auf die Zeichnungen näher erläutert. Es zeigen:

Fig. 1: Eine schematische Ansicht einer erfindungsgemäßen Bipolarplatte;

Fig. 2: eine schematische Ansicht einer Bipolarplatte nach dem Stand der Technik;

Fig. 3: eine schematische Ansicht einer Bipolarplatte;

Fig. 4: eine Bipolarplatte;

Fig. 5: eine Bipolarplatte;

Fig. 6: eine Bipolarplatte;

Fig. 7: ein Serpentinenprofil einer Bipolarplatte;

Fig. 8: ein weiteres Serpentinenprofil.

Fig. 1 zeigt schematisch den vorgegebenen Strömungsverlauf eines Mediums entlang der Fluidkanäle einer Bipolarplatte 100 gemäß der vorliegenden Erfindung. Die aktive Zellfläche 110, auch Flowfield genannt, hat einen rechteckigen Umfang und wird über Zuflußdurchbrüche 120 der Bipolarplatte 100 mit ersten und zweiten Medien, beispielsweise mit Prozeßgasen und Kühlmittel beaufschlagt.

Die in der schematischen Fig. 1 nicht einzeln gezeigten Fluidkanäle für die Medien verlaufen mit Ausnahme eines Verteilbereichs in der Nähe der Durchbrüche parallel zueinander und sind zu geradlinig verlaufenden Feldern 130 und zu gemeinsamen Umlenkungen 140 gruppiert. Die Bipolarplatte 100 ist also für einen Gleichstrom- und einen Gegenstrombetrieb verwendbar. Vorzugsweise werden Kathodenfluid und Kühlfluid im Gleichstrom und Anodenfluid dazu im Gegenstrom geführt.

Die Fluidkanäle verlaufen in einem ansteigenden ersten Abschnitt 150 im wesentlichen geradlinig nach oben und in einem serpentinenartigen zweiten Abschnitt 160 nach unten. Produktwasser, das entlang der ersten Fluidkanäle entsteht, kann dadurch zu den Abflußdurchbrüchen 170 abfließen, ohne dabei gegen die Schwerkraft strömen zu müssen. Im ersten Abschnitt 150 der ersten Fluidkanäle tritt noch keine nennenswerte Produktwasserbildung auf, wenn durch eine geeignete Auslegung der Bipolarplatte 100 der Taupunkt und die Temperatur des ersten Fluids lokal entsprechend eingestellt werden.

Da die Abflußdurchbrüche 170 unterhalb des Flowfields 110 angeordnet sind, sammelt sich das abfließende Produktwasser auf der den Fluidkanälen gegenüberliegenden Seite der Abflüsse 170, so daß eine gleichmäßige Durchströmung der Fluidkanäle weiter verbessert wird.

Ein Längenausgleichsbereich 180 dient einem Ausgleich der Fluidkanallängen, die aufgrund der Umlenkungen 140 ansonsten unterschiedlich wären, da Rechts- und Linksumlenkungen sich zwar grundsätzlich gegenseitig aufheben, bei dem hier gezeigten Beispiel aber netto eine 180°-Rechtsumlenkung vorliegt. Gleiche Fluidkanallängen bewirken - bei gleichen Kanalquerschnitten - eine gleichmäßige Strömungsverteilung über das Flowfield 110.

Druckverlustberechnungen an Zellgeometrien mit einer aktiven Zellfläche von praxisrelevanter Größe (> 100 $cm^2$) haben ergeben, daß schon bei Verwendung von mehr als 10 parallelen Kanälen und Anordnung der Anschlüsse auf der gleichen Seite einer rechteckigen aktiven Zellfläche solch erhebliche Unterschiede in der Gasverteilung ergeben, daß die erforderlichen Kanalbreiten der sich an den Rändern des Kanalbündels gegenüberliegenden Kanäle um über 30% unterscheiden müßten, um eine homogene Gleichverteilung zu erzielen. Eine solche Anordnung würde eine geringere Stegdichte in Bereichen mit großer Kanalbreite und somit zu einer Verschlechterung der Ableitung elektrischen Stroms über die Bipolarplatte führen. Überdies wären für eine ausreichende Beaufschlagung mit Kühlfluid - die Stege zwischen den Prozeßgaskanälen nehmen üblicherweise Kühlfluidkanäle in sich auf - breitere Stege erforderlich. Dies würde jedoch den Zutritt der Reaktionsgase zu den unter den Stegen befindlichen Bereichen der aktiven Zellfläche erschweren und damit den Brennstoffzellenprozeß beeinträchtigen.

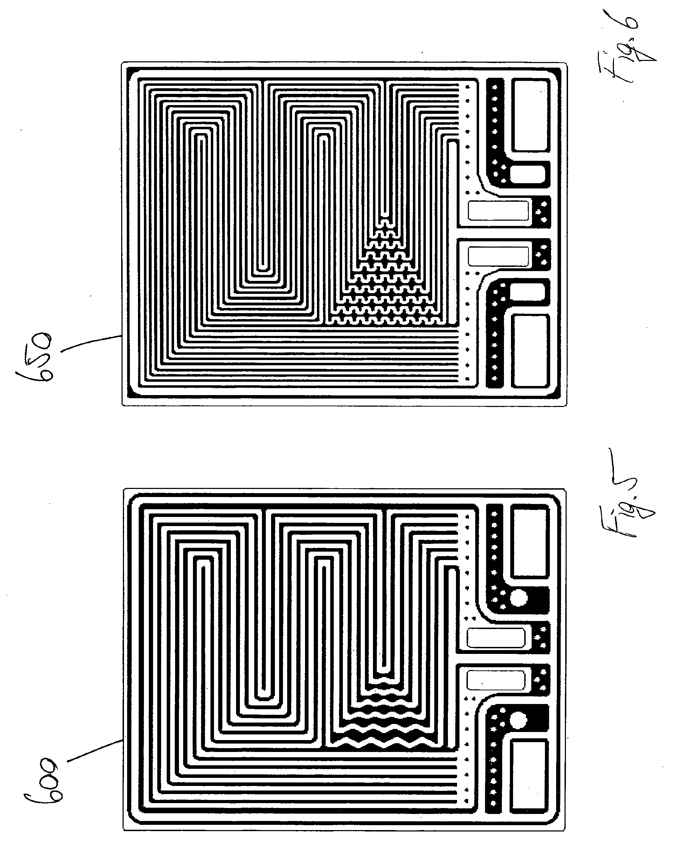

Fig. 4 zeigt eine Bipolarplatte 400 gemäß der vorliegenden Erfindung mit einem Anodengas-Zuflußdurchbruch 410, einem Anodengas-Abflußdurchbruch 420, einem Kühlmittel-Zuflußdurchbruch 430, einem Kühlmittel-Abflußdurchbruch 440, einem Kathodengas-Zuflußdurchbruch 450 und einem Kathodengas-Abflußdurchbruch 460. Kathodengas 470 wird auf Fluidkanäle 480 verteilt, die zwischen Stegen 490 gebildet werden.

Hervorgehoben sind ein senkrechtes Strömungsfeld 500 und ein waagerechtes Strömungsfeld 510 mit im wesentlichen geradlinig verlaufenden Fluidkanälen 480 sowie eine Umlenkung 520 und ein Längenausgleichsbereich 530, aufgrund dessen die Fluidkanäle 480 trotz der sich nicht vollständig aufhebenden Rechts- und Linksumlenkungen eine im wesentlichen gleiche Länge aufweisen, da weiter innen liegende Fluidkanäle hier mehr Serpentinen aufweisen als weiter außen liegende Fluidkanäle.

Der Längenausgleichsbereich 530 ist vorteilhaft hydraulisch in der Nähe des Zuflußdurchbruchs 450 angeordnet, da hier bei Verwendung eines geeigneten Temperaturprofils entlang der Fluidkanäle 480 und eines geeigneten Eingangstaupunktes des Kathodengases noch keine nennenswerte Produktwasserbildung eintritt.

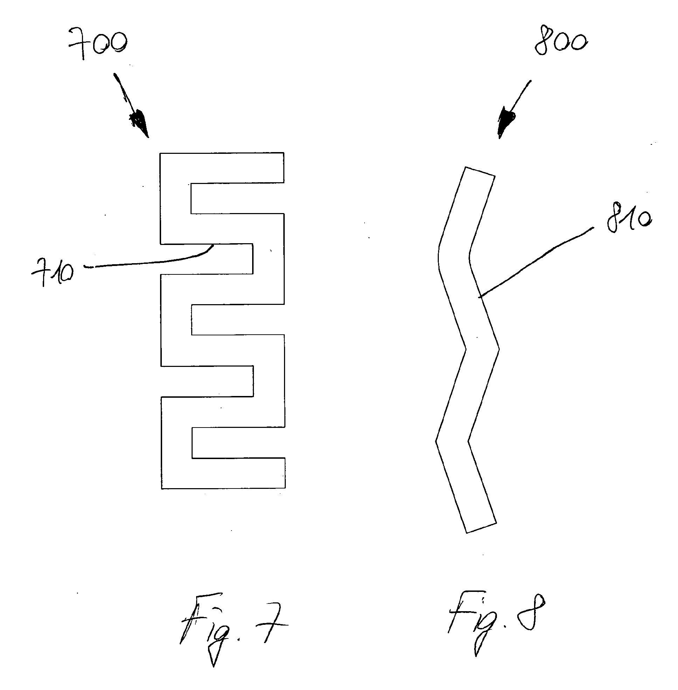

Bei den in Fig. 5 und Fig. 6 gezeigten Ausführungsbeispielen 600, 650 ist ein Längenausgleichsbereich in eine Umlenkung integriert, wodurch die Fluidkanäle im senkrechten Feld, einem ersten Abschnitt der Fluidkanäle, verkürzt werden. Dadurch wird erreicht, daß der vorteilhafte Verlauf ohne Anstiege, nämlich entlang eines zweiten Abschnitts der Fluidkanäle, für das Produktwasser zu einem Abflußdurchbruch hin, verlängert wird, und daß noch mehr Produktwasser abfließen kann, ohne gegen die Schwerkraft strömen zu müssen.

Bei der Bipolarplatte 600 in Fig. 5 weisen die Kanäle im Längenausgleichsbereich unterschiedliche Serpentinenwinkel auf, so daß nicht nur die Kanallängen, sondern auch ein Druckverlust der einzelnen Strömungskanäle gezielt beeinflußbar ist.

Bei der Bipolarplatte 650 in Fig. 6 weisen die Kanäle im Längenausgleichsbereich gleiche Serpentinenwinkel auf, so daß die einzelnen Strömungskanäle unter Umständen gleichmäßig durchströmt werden.

Fig. 7 zeigt ein Serpentinenprofil 700 für die Strömungskanäle mit einem Serpentinenwinkel von 180°, also bei entsprechender Anordnung des gesamten Brennstoffzellenstapels mit waagrechten Strömungskanalabschnitten 710.

Das Serpentinenprofil 800 in Fig. 8 weist demgegenüber einen Serpentinenwinkel von nur 36° auf, wobei auch andere Winkel zwischen 0° und 180° möglich sind. Die Strömungskanalabschnitte 810 weisen ein Gefälle auf, so daß unter Umständen ein Abtransport von flüssigem Wasser aus den Kanälen unterstützt wird. Mit unterschiedlichen Serpentinenwinkeln sind die Strömungskanäle gleichmäßig oder aber auch gezielt mit unterschiedlichen Gasmengen pro Flächeneinheit beaufschlagbar, so daß unter Umständen eine Vergleichmäßigung eines Stromdichteprofils über die Bipolarplatte ermöglicht wird.

Insbesondere die Verteilstruktur zur Verteilung der Fluide von den Zuflüssen auf die Fluidkanäle beziehungsweise von den Fluidkanälen auf die Abflüsse kann so gestaltet sein, wie in den früheren Anmeldungen DE 102 24 397 und DE 102 49 298 der Anmelderin, deren Inhalt hiermit ausdrücklich zum Offenbarungsinhalt gehört, beschrieben.

Die vorliegende Erfindung wurde am Beispiel einer Bipolarplatte für einen Brennstoffzellenstapel beschrieben. Es wird jedoch darauf hingewiesen, daß die erfindungsgemäße Bipolarplatte auch für andere Anwendungszwecke geeignet ist.

**Patentansprüche**

**1.** Bipolarplatte, insbesondere für eine Brennstoffzelle für ein Kraftfahrzeug, mit zumindest einem ersten Fluidkanal, zumindest einem ersten Zuflußdurchbruch und zumindest einem ersten Abflußdurchbruch für ein erstes Medium, **dadurch gekennzeichnet, daß** der erste Zuflußdurchbruch und der erste Abflußdurchbruch in nicht diametral gegenüberliegenden Randbereichen der Bipolarplatte, insbesondere benachbart zueinander angeordnet sind.

2. Bipolarplatte nach einem der vorhergehenden Ansprüche, **dadurch gekennzeichnet, daß** die Bipolarplatte zumindest einen zweiten Fluidkanal, zumindest einen zweiten Zuflußdurchbruch und zumindest einen zweiten Abflußdurchbruch für ein zweites Medium aufweist, und daß die ersten und zweiten Zufluß- und insbesondere Abflußdurchbrüche in einem Randbereich auf einer Seite der Bipolarplatte, insbesondere benachbart zueinander angeordnet sind.

3. Bipolarplatte nach einem der vorhergehenden Ansprüche, **dadurch gekennzeichnet, daß** mehrere erste und/oder mehrere zweite Fluidkanäle eine gleiche Querschnittsfläche und eine gleiche Länge aufweisen.

4. Bipolarplatte nach einem der vorhergehenden Ansprüche, **dadurch gekennzeichnet, daß** zumindest ein erster und/oder zweiter Fluidkanal Serpentinen aufweist, wobei die Anzahl der Serpentinen zumindest zweier Fluidkanäle unterschiedlich ist.

5. Bipolarplatte nach einem der vorhergehenden Ansprüche, **dadurch gekennzeichnet, daß** ein erster Abschnitt zumindest eines ersten Fluidkanals von dem zumindest einen ersten Zuflußdurchbruch zu einem dem Randbereich der ersten Zufluß- und Abflußdurchbrüche gegenüberliegenden Randbereich der Bipolarplatte verläuft, daß ein zweiter Abschnitt des zumindest einen ersten Fluidkanals von dem gegenüberliegenden Randbereich zu dem zumindest einen Abflußdurchbruch verläuft, und daß der erste Abschnitt kürzer ist als der zweite Abschnitt.

6. Bipolarplatte nach einem der vorhergehenden Ansprüche, **dadurch gekennzeichnet, daß** erste Fluidkanäle im wesentlichen über ihre gesamte Länge parallel zu zweiten Fluidkanälen angeordnet sind.

7. Bipolarplatte nach einem der vorhergehenden Ansprüche, **dadurch gekennzeichnet, daß** die Summe der Höhen eines ersten und eines zweiten Fluidkanals größer als die Höhe der Bipolarplatte ist.

8. Brennstoffzellenstapel, insbesondere für ein Kraftfahrzeug, mit zumindest einer Brennstoffzelle, die zumindest einen Elektrolyten und zwei Elektroden aufweist, und zumindest einer Bipolarplatte, **dadurch gekennzeichnet, daß** die zumindest eine Bipolarplatte nach einem der vorhergehenden Ansprüche ausgebildet ist.

9. Brennstoffzellenstapel nach dem vorhergehenden Anspruch, **dadurch gekennzeichnet, daß** die ersten und insbesondere die zweiten Zufluß und Abflußdurchbrüche der zumindest einen Bipolarplatte im Betrieb des Brennstoffzellenstapels in einem Randbereich der Unterseite des Brennstoffzellenstapels anordbar sind.

Fig. 1

225

200

230

210

240   Fig. 2

220

325

300

355

330

360

350

320

Fig. 3

Fig. 4

Fig. 5

Fig. 6

EP 1 511 102 A2

700

710

Fig. 7

800

810

Fig. 8